Europäisches Patentamt

European Patent Office

Office européen des brevets

(19)

(11) Veröffentlichungsnummer: **0 218 941 B1**

(12) **EUROPÄISCHE PATENTSCHRIFT**

(45) Veröffentlichungstag der Patentschrift: **29.05.91**

(51) Int. Cl.⁵: **C08K 7/08**, C08J 5/04

(21) Anmeldenummer: **86112814.8**

(22) Anmeldetag: **17.09.86**

(54) **Thermoplastische Polymerwerkstoffe mit molekularen anorganischen Verstärkungsfasern.**

(30) Priorität: **20.09.85 DE 3533574**

(43) Veröffentlichungstag der Anmeldung:
**22.04.87 Patentblatt 87/17**

(45) Bekanntmachung des Hinweises auf die
Patenterteilung:
**29.05.91 Patentblatt 91/22**

(84) Benannte Vertragsstaaten:
**AT BE CH DE FR GB IT LI NL SE**

(56) Entgegenhaltungen:
DE-A- 1 952 398
US-A- 4 176 171

HANDBOOK OF FILLERS AND REINFORCE-
MENTS FOR PLASTICS. Edited by H.S. KATZ,
JV MILEWSKI, Van Nostrand Reinhold Co.,
Chapter 24

(73) Patentinhaber: **BASF Aktiengesellschaft
Carl-Bosch-Strasse 38
W-6700 Ludwigshafen(DE)**

(72) Erfinder: **Sterzel, Hans-Josef, Dr.
Wasgauring 3
W-56701 Dannstadt-Schauernheim(DE)**
Erfinder: **Portugall, Michael, Dr.
Raiffeisenstrasse 7
W-6706 Wachenheim(DE)**

**Beschreibung**

Es ist bekannt, Kunststoffe mit verstärkenden Fasern wie Glasfasern oder Kohlenstoffasern, aber auch kristallinen anorganischen Fasern auf der Basis von Titanaten, Aluminiumoxid oder Siliziumcarbid auszurüsten, um Steifigkeit und Festigkeit dieser Kunststoffe erheblich zu steigern.

Es ist ebenfalls bekannt, daß die mechanischen Eigenschaften des Verbundwerkstoffs mit sinkendem Faserdurchmesser durchweg verbessert werden. So steigt die Bruchfestigkeit und Zähigkeit an; die Kerbschlagzähigkeit nimmt zu, weil die Kerbwirkung der Verstärkungsfasern mit sinkendem Durchmesser abnimmt und die Verbundfestigkeit nimmt mit der dabei steigenden Oberfläche zu. Außerdem nimmt die Festigkeit der Verstärkungsfasern selbst zu, weil bei sinkendem Durchmesser der Anteil an Oberflächenfehlern abnimmt (D.W. von Krevelen, Kautschuk + Gummi, Kunststoffe 37, Jg., Nr. 4/84, Seite 295).

Dem daraus folgenden Bestreben, den Durchmesser der Verstärkungsfasern soweit als möglich abzusenken, stehen jedoch erhebliche Probleme gegenüber: So ist es technisch nicht möglich, Einzelfilamente mit Durchmessern unter 5 $\mu$m ohne Beschädigung zu handhaben. Anorganische Fasern mit Durchmessern um 1 $\mu$m und darunter können gefährliche Erkrankungen der Atmungsorgane auslösen, wenn sie frei gehandhabt werden.

Aus diesen Gründen wird bisher in der Praxis nur mit Faserdurchmessern oberhalb 3 $\mu$m (= 3000 nm) gearbeitet.

Um die beschriebenen Nachteile zu umgehen, hat man sich bemüht, steife, mesomorphe organische Polymere als molekulare Verstärkungsfasern in organische Polymere einzubringen. Dazu werden beispielsweise Poly-2,5(6)-benzimidazol als Matrixpolymeres und Poly-p-phenylenbenzothiazol als steifes, faserbildendes Polymer in Trifluormethansulfonsäure gemeinsam gelöst und aus dieser Lösung Filme gegossen (W.F. Hwang et al., Composites on a molecular level, J. Macromol. Sci.-Phys., B. 22 (2) (1983) 231).

Es gelingt auch, in Polyamiden als Matrixpolymere Poly-p-terephthalamid als Fasern einzulagern, wozu beide Polymere gemeinsam in konzentrierter Schwefelsäure gelöst und anschließend in Wasser ausgefällt werden (Motowo Takayanagi et al., J. Macromol. Sci.-Phys., B. 17 (4) (1980) 591).

In beiden Fällen erhält man Fibrillen der steifen Polymeren im Matrixpolymeren. Die Fibrillen weisen Durchmesser von 5 bis 40 nm auf mit l/d-Verhältnissen von 20 bis 200, wobei hohe l/d-Verhältnisse von Vorteil sind.

Nachteilig an diesen Verfahren ist jedoch, daß die Verbundherstellung durch Lösen der Komponenten in exotischen und/oder stark sauren Lösungsmitteln erfolgen muß. Die steifen, faserbildenden mesomorphen Polymeren sind nicht thermoplastisch verarbeitbar und nur in den aufgeführten Lösungsmitteln löslich. Da sie auch nicht in den Schmelzen üblicher als Matrix verwendbarer Thermoplaste löslich sind, schränkt dies die wirtschaftliche Verbundherstellung wesentlich ein.

Es bestand deshalb die Aufgabe, anorganische Verstärkungsfasern mit geringen Durchmessern und hohen l/d-Verhältnissen möglichst wirtschaftlich in Polymere einzubringen.

Erfindungsgemäß wird diese Aufgabe gelöst, indem Fasern aus Metalloxiden durch Hydrolyse einer reaktiven Organometallverbindung in der Lösung oder Schmelze des Matrixpolymeren unter den Einfluß eines hohen Schergefälles erzeugt werden.

Diese Arbeitsweise unterscheidet sich grundsätzlich von bekannten Verfahren zur Herstellung anorganischer Fasern, wie sie in DE-A-19 52 398, DE-A-21 30 315 oder DE-A-23 59 061 beschrieben sind. Dort werden ausgehend von anorganischen Metallsalzen Sole der Metalloxide durch pH-Anhebung in wäßriger Lösung erzeugt. Um diese Sole oder Kolloide verspinnen zu können, wird dies in Gegenwart wasserlöslicher organischer Polymerer wie Polyvinylalkohol ausgeführt. Die wasserlöslichen organischen Polymeren dienen als Hilfsmittel zur Verspinnung. Nach dem Verspinnen werden die organischen Polymeren ausgebrannt, um die reinen anorganischen Fasern zu erhalten. Metalloxid-Fasern mit einem Durchmesser unterhalb von 100nm. sind in den genannten Schriften nicht beschrieben.

Als anorganische Verstärkungsfasern können Fasern auf der Basis $TiO_2$, $SnO_2$, $ZrO_2$, $VO_2$, $UO_2$, $ThO_2$, $TiO_2/SiO_2$, $TiO_2/CaO$, $TiO_2/MgO$, $TiO_2/Al_2O_3$, $TiO_2/CaO/SiO_2$ oder $Al_2O_3$ in Frage. Bevorzugt wird für die erfindungsgemäßen Werkstoffe jedoch $Al_2O_3$ eingesetzt, weil Fasern aus $Al_2O_3$, bezogen auf ihre Dichte, eine besonders hohe Festigkeit und Steifigkeit aufweisen, reaktive aluminiumorganische Verbindungen leicht zugänglich sind und amorphe Al-hydroxide/oxide schon bei relativ niedrigen Temperaturen im Bereich von 300 bis 400°C kristallisieren.

Die erfindungsgemäßen Werkstoffe können auf zwei Wegen hergestellt werden.

Bei einer bevorzugten Ausführungsform werden das Matrixpolymere und die aluminiumorganische Verbindung in einem gemeinsamen, vorzugsweise polaren Lösungsmittel gelöst. Zu dieser Lösung wird, durch ein organisches Lösungsmittel verdünnt, unter starkem Rühren die molar benötigte Menge Wasser gegeben, wobei ein Aluminiumhydroxid-Sol entsteht. Dieses Sol wird einem Reaktor, vorzugsweise einem Extruder, zugeführt, in welchem das organische Lösungsmittel verdampft und unter dem Einfluß eines hohen Schergefälles und von Wärme das Aluminiumhydroxid-Sol zu Aluminiumoxid kondensiert und kristallisiert.

Bei der anderen Ausführungsform wird in Abwesenheit eines organischen Lösungsmittels gearbeitet. In diesem Fall wird eine aluminiumorganische Verbindung benutzt, die mit der Schmelze des Polymeren homogen mischbar ist. Diese Mischung wird einem Extruder zugeführt und unter Zufuhr von Dampf sowohl die Hydrolyse als auch Kondensation und Kristallisation des Aluminiumoxids durchgeführt.

Wegen ihrer leichten Zugänglichkeit und ihrer gefahrlosen Handhabbarkeit werden als Organometallverbindungen Aluminiumalkoxide bevorzugt. Durch gezielten Austausch der Alkoxid-Gruppen kann die Löslichkeit der Alkoxide den Bedürfnissen entsprechend angepaßt werden.

Als Polymere kommen wegen der hohen Temperaturbelastung in der Kristallisationsstufe nur solche in Betracht, die bei Temperaturen oberhalb von 250 bis 300°C verarbeitet werden können, wie Polyamid-6, Polysulfon, Polyethersulfon, Polyamidimid, aromatisches Polyetherimid, aromatische Polyetherketone oder aromatische Polyester.

Für die erste Ausführungsform sind als Lösungsmittel N-Methylpyrrolidon, N-Cyclohexylpyrrolidon, Sulfolan, Triphenylphosphit, Triphenylphosphat, Trikresylphosphat oder Diphenylsulfon geeignet. Das Mengenverhältnis von Polymer, aluminiumorganischer Verbindung und Lösungsmittel wird so eingestellt, daß der fertige Verbundwerkstoff 1 bis 80 Vol.%, vorzugsweise 5 bis 50 Vol.% Aluminiumoxid enthält.

Zur Durchführung der Hydrolyse wird unterhalb des Siedepunkts der Lösung unter starkem Rühren die stöchiometrisch benötigte Menge Wasser, evtl. zusammen mit geringen Mengen Ammoniak oder Aminen als Beschleuniger zugegeben. Um ein Ausflocken des entstehenden Gels an der Eintropfstelle zu vermeiden, wird das Wasser zweckmäßigerweise durch ein organisches Lösungsmittel "verdünnt", wobei bevorzugt das in der Reaktionsmischung vorhandene Lösungsmittel eingesetzt wird.

Im folgenden Reaktionsschritt wird die Temperatur soweit erhöht, daß Lösungsmittel und bei der Hydrolyse abgespaltene organische Reste abdestilliert werden. Diese Reaktion wird vorzugsweise unter vermindertem Druck in einem Rührkessel oder einem anderen zur Entgasung geeigneten Aggregat, wie Dünnschichtverdampfer oder Filmtruder durchgeführt. Wesentlich ist, daß mindestens die Endphase der Entgasung in einem Extruder unter Schergefälle von 50 bis 5000 $s^{-1}$, bevorzugt von 100 bis 1000 $s^{-1}$ stattfindet. Dabei wird die Temperatur über 250°C, vorzugsweise auf 300 bis 400°C angehoben, weil derart hohe Temperaturen zur Bildung von Aluminiumoxid und dessen Kristallisation notwendig sind. Die Verweilzeit in diesem Temperaturbereich beträgt 1 bis 100 min, bevorzugt 3 bis 15 min.

Unter dem Einfluß des Schergefälles werden die kolloidalen Aluminiumhydroxid-Teilchen in faserige Form gebracht, was mit einer Erhöhung der Oberflächenenergie verbunden ist. Dieser thermodynamisch ungünstigen Form versucht das Aluminiumhydroxid offensichtlich durch Kondensation und Kristallisation auszuweichen.

Nach vollständiger Entfernung des Lösungsmittels wird eine granulierfähige Schmelze erhalten. Nach dem Austragen als Strang, Abkühlung und Granulierung und Trocknung kann das Granulat durch die üblichen Kunststoffverarbeitungsverfahren mittels Spritzguß, Extrusion, Formblasen, Tiefziehen oder Verspinnen zu Formkörpern, Profilen, Folien, Hohlkörpern, Fasern oder Überzügen verarbeitet werden.

Bei der zweiten Ausführungsform wird auf ein organisches Lösungsmittel verzichtet und die Hydrolyse im Extruder durchgeführt. Dazu muß das verwendete Polymere mit der Organometallverbindung vollständig und homogen mischbar sein. Geeignet sind polare Aluminiumalkoxide, vorzugsweise Aluminiumtridiethylenglykolat, das leicht durch Umsetzung von 1 Mol Aluminiumtriisopropylat mit 3 Molen Diethylenglykol unter Abdestillieren von Isopropanol zugänglich ist.

Das Vermischen des Alkoxids mit dem Polymeren wird in einem Extruder vorgenommen. Sinnvollerweise erfolgt die nachfolgende Hydrolyse unter Einpressen von Wasserdampf in einer anschließenden Extruderzone. In einer sich daran anschließenden weiteren Extruderzone werden der Alkohol und überschüssiger Dampf unter vermindertem Druck abgezogen. Die Bedingungen für Temperaturen und Schergefälle sind gleich wie in der ersten Ausführungsform.

Beispiel 1

In einem Rührkessel wurden 13 kg N-Methylpyrrolidon vorgelegt und 10 kg Polysulfon auf der Basis von Bisphenol-A und 4,4'-Dichlordiphenylsulfon mit einer relativen Viskosität von 1,57, gemessen an einer 1 %igen Lösung in N-Methylpyrrolidon bei 25°C, zugegeben. Das Polysulfon wurde bei 120 bis 130°C innerhalb 3 h gelöst.

In einem zweiten Behälter wurden 20,4 kg (100 Mole) Aluminiumtriisopropylat unter wasserfreiem Stickstoff aufgeschmolzen und die Schmelze auf 130 bis 140° C gebracht.

Die Al-triisopropylat-Schmelze wurde zur Polysulfon-Lösung gegeben und die Temperatur der Mischung auf 150° C gesteigert.

Innerhalb von 1,5 h wurde eine Lösung aus 10 kg N-Methylpyrrolidon und 5,4 kg Wasser (300 Mole) unter starkem Rühren zudosiert. Dabei destilliert Isopropanol ab. Um das Isopropanol möglichst vollständig (18 kg entsprechend 300 Molen) abzudestillieren, wurde die Temperatur auf 180° C erhöht.

Das so erhaltene Aluminiumhydroxid-Sol in N-Methylpyrrolidon/Polysulfon wurde in einen Doppelwellenextruder gepumpt. Der Extruder war aus vier Zonen aufgebaut, und die Dosierung erfolgte in die erste Heizzone. Die Heizzonen wurden auf 280° C, 300° C, 320° C und 330° C temperiert. Die zweite und dritte Heizzone waren mit Entgasungsdomen ausgerüstet, aus denen das N-Methylpyrrolidon und Reaktionswasser unter einem Druck im Bereich von 30 bis 40 mbar abdestilliert wurde. Zur Erzeugung hoher Schergefälle waren die zweite und dritte Heizzone teilweise mit Knetelementen bestückt. Die erste und vierte Heizzone enthielten Förderelemente, die einen Vakuumdurchbruch vermieden.

Die Schneckendrehzahl wurde auf 250 U/min. (Schergefälle ca. 400 $s^{-1}$) eingestellt, der Förderstrom auf 4 kg/h Lösung.

Am Ausgang des Extruders wurde der Polymerstrang abgezogen, durch ein Wasserbad geführt und granuliert.

Das so erhaltene Polysulfon enthielt ca. 13 Vol.% Aluminiumoxid (entsprechend ca. 33 Gew.%), in Form von Fasern mit Durchmessern um 10 nm und Längen um 300nm, entsprechend einem l/d-Verhältnis von 30.

Beispiel 2

Ein Gemenge aus 20,4 kg (100 Mole) Aluminiumtriisopropylat und 31,8 kg (300 Mole) Diethylenglykol wurde unter wasserfreiem Stickstoff in einem mit einer Destillationsvorrichtung versehenen Rührkessel auf ca. 100° C aufgeheizt. Bei ca. 90° C begann die Umalkoxidierung unter Abdestillieren von Isopropanol. Die Temperatur wurde langsam gesteigert, um die Abspaltung von Isopropanol lebhaft in Gang zu halten. Nachdem ca. 70 bis 80 % von insgesamt 18 kg Isopropanol bei ca. 140° C abdestilliert waren, wurde die Temperatur stetig auf ca. 220° C gesteigert.

Nach der vollständigen Umsetzung wurden 5,1 kg Polyethersulfon aus 4,4'-Dichlordiphenylsulfon und 4,4'-Dihydroxidiphenylsulfon mit einer relativen Viskosität von 1,54, gemessen an einer 1 %igen Lösung in N-Methylpyrrolidon bei 25° C, zugegeben. Das Polyethersulfon wies einen Wassergehalt kleiner als 0,01 % auf.

Zum Auflösen des Polyethersulfons im Aluminiumtridiethylenglykolat wurde die Temperatur auf ca. 240° C gesteigert. Nach ca. 3 h war das Polyethersulfon vollständig gelöst.

Die Lösung des Polyethersulfons in Aluminiumtridiethylenglykolat wurde bei 240° C über eine Zahnradpumpe einem Extruder zugeführt.

Der Extruder war aus sechs Heizzonen aufgebaut, die Zudosierung erfolgte in die erste Zone, in die zweite Zone wurde Wasserdampf, mit einer Temperatur von ca. 200° C bei 16 bar über ein Mengenregelventil zugeführt, die vierte und fünfte Heizzone wiesen je einen Entgasungsdom auf, durch den Diethylenglykol und überschüssiger Wasserdampf bei Drucken um 40 bis 60 mbar abgezogen wurden. Die dritte, vierte und fünfte Heizzone enthielten Knetelemente, die für hohe Schergefälle und intensive Oberflächenerneuerung sorgen. Das Temperaturprofil von Heizzone 1 bis 6 entsprach 250° C, 250° C, 300° C, 330° C, 360° C, 390° C. Die Schneckendrehzahl wurde auf 250 U/min (Schergefälle ca. 400 $s^{-1}$) eingestellt, der Förderstrom auf 6 kg Lösung/h, der Dampfstrom auf ca. 1,5 kg/h.

Der abgezogene Polymerstrang wurde durch ein Wasserbad geführt und granuliert. Das so erhaltene Polyethersulfon enthielt ca. 25 Vol.% Aluminiumoxid (entsprechend ca. 40 Gew.%)in Form von Fasern mit Durchmessern von 5 nm und Längen um 200 nm, entsprechend einem l/d-verhältnis von 40.

Beispiel 3 (Vergleichsbeispiel)

Durch Compoundieren mittels eines Doppelwellenextruders wurde Polyethersulfon (relative Viskosität in N-Methylpyrrolidon 1 %ig bei 25° C: 1,54) mit einer Aluminiumoxid-Stapelfaser ("Saffil") bei 370° C vermischt. Der Faseranteil im compoundierten Polymeren betrug 50 Gew.%, das Maximum des Faserdurchmessers lag bei 3000 nm.

# EP 0 218 941 B1

### Ergebnisse

Aus den getrockneten Granulaten wurden mittels einer Schneckenspritzgußmaschine Prüfkörper für die Zugprüfung nach DIN 53 455 (Festigkeit) und DIN 53 457 (Steifigkeit, E-Modul) hergestellt. Die Massetemperatur für das Material aus Beispiel 1 betrug 320°C, die Massetemperatur für die anderen Beispiele 360°C.

In der folgenden Tabelle sind die Meßergebnisse aufgeführt, die zeigen, daß die erfindungsgemäßen Polymerwerkstoffe dem Vergleich nach dem Stand der Technik weit überlegen sind.

| Beispiel | Anteil Al-oxid Gew.% | Zugfestikgeit MPa | E-Modul GPa |
|---|---|---|---|
| 1 | 33 | 1.560 | 69 |
| 2 | 50 | 2.800 | 130 |
| 3 (Vergl.) | 50 | 440 | 70 |

### Ansprüche

1. Verbundwerkstoffe aus thermoplastischen Polymeren, die oberhalb von 150°C erweichen, und Metalloxid-Verstärkungsfasern mit einem Durchmesser von 1 bis 100 nm und einem l/d-Verhältnis von 5 bis 1000, die durch Hydrolyse einer reaktiven Organometallverbindung in homogener Phase in dem thermoplastischen Polymeren unter dem Einfluß eines hohen Schergefälles erzeugt wurden.

2. Verbundwerkstoffe nach Anspruch 1, dadurch gekennzeichnet, daß der Anteil der anorganischen Fasern im Werkstoff 1 bis 80 Vol.%, vorzugsweise 5 bis 50 Vol.% beträgt.

3. Verbundwerkstoffe nach Anspruch 1, dadurch gekennzeichnet, daß der Thermoplast aus Polyamid-6, Polysulfon, Polyethersulfon, aromatischem Polyetherimid, Polyamidimid, aromatischen Polyetherketonen oder aromatischen Polyestern ausgewählt ist.

4. Verbundwerkstoffe nach Anspruch 1, dadurch gekennzeichnet, daß die anorganischen Verstärkungsfasern aus Aluminiumoxid bestehen.

5. Verfahren zur Herstellung der Verbundwerkstoffe nach Anspruch 1, dadurch gekennzeichnet, daß man Metallalkoxide mit dem Thermoplasten in flüssiger Phase homogen vermischt, die zur Hydrolyse benötigte Menge Wasser zufügt und die Mischung bei Temperaturen oberhalb von 250°C unter Einwirkung eines Schergefälles von 50 bis 5000 s$^{-1}$ erwärmt.

6. Verfahren nach Anspruch 5, dadurch gekennzeichnet, daß das Vermischen der Komponenten und die Hydrolyse in einem hochsiedenden polaren organischen Lösungsmittel durchgeführt wird.

7. Verfahren nach Anspruch 5, dadurch gekennzeichnet, daß die Thermoplastschmelze mit dem Metallalkoxid homogen vermischt und die Hydrolyse in einem Extruder durchgeführt wird.

8. Verwendung der thermoplastischen Polymerwerkstoffe nach Anspruch 1 in der Form von Formkörpern, Hohlkörpern, Profilen, Folien, Fasern oder Überzügen.

### Claims

1. A composite material consisting of a thermoplastic polymer which softens at above 150°C and metal oxide reinforcing fibers, having a diameter of from 1 to 100 nm and an l/d ratio of from 5 to 1000, which

5

are produced by hydrolyzing a reactive organometallic compound in the homogeneous phase in the thermoplastic polymer under the action of a high shear gradient.

2.  A composite material as claimed in claim 1, wherein the proportion of inorganic fibers in the material is from 1 to 80, preferably from 5 to 50, % by volume.

3.  A composite material as claimed in claim 1, wherein the thermoplastic is selected from the group consisting of nylon 6, polysulfone, polyethersulfone, aromatic polyether imide, polyamidimide, aromatic polyether ketones and aromatic polyesters.

4.  A composite material as claimed in claim 1, wherein the inorganic reinforcing fibers consist of alumina.

5.  A process for the preparation of a composite material as claimed in claim 1, wherein a metal alkoxide is mixed with the thermoplastic in the liquid phase to give a homogeneous mixture, the amount of water required for hydrolysis is added and the mixture is heated at above 250°C under the action of a shear gradient of from 50 to 5000 $s^{-1}$.

6.  A process as claimed in claim 5, wherein mixing of the components and hydrolysis are carried out in a high-boiling polar organic solvent.

7.  A process as claimed in claim 5, wherein the thermoplastic melt is mixed with the metal alkoxide to give a homogeneous mixture, and hydrolysis is carried out in an extruder.

8.  The use of a thermoplastic polymer material as claimed in claim 1 in the form of a molding, a hollow article, a profile, a film, a fiber or a coating.


## Revendications

1.  Matériaux composites constitués de polymères thermoplastiques qui ramollissent au-delà de 150°C et de fibres de renforcement en oxydes de métaux, d'un diamètre de 1 à 100 nm et d'un rapport l/d de 5 à 1000, que l'on obtient par l'hydrolyse d'un composé organométallique en phase homogène dans le polymère thermoplastique, sous l'influence d'un gradient de cisaillement élevé.

2.  Matériau composite suivant la revendication 1, caractérisé en ce que la fraction de fibres inorganiques dans le matériau varie de 1 à 80% en volume, de préférence de 5 à 50% en volume.

3.  Matériau composite suivant la revendication 1, caractérisé en ce que le polymère thermoplastique se compose de polyamide-6, de polysulfone, de polyéthersulfone, d'un polyétherimide aromatique, de polyamidimide, de polyéthercétones aromatiques, ou de polyesters aromatiques.

4.  Matériau composite suivant la revendication 1, caractérisé en ce que les fibres de renforcement minérales se composent d'oxyde d'aluminium.

5.  Procédé de fabrication de matériaux composites selon la revendication 1, caractérisé en ce que l'on mélange de façon homogène des alcoolates de métaux au polymère thermoplastique en phase liquide, on ajoute la proportion d'eau nécessaire à l'hydrolyse et on chauffe le mélange à des températures supérieures à 250°C, sous l'action d'un gradient de cisaillement de 50 à 5000 $s^{-1}$.

6.  Procédé suivant la revendication 5, caractérisé en ce que l'on réalise le mélange des composants et l'hydrolyse dans un solvant organique polaire à point d'ébullition élevé.

7.  Procédé suivant. la revendication 5, caractérisé en ce que la masse fondue de polymère thermoplastique est mélangée de façon homogène a l'alcoolate de métal alcalin et l'hydrolyse est réalisée dans une extrudeuse.

8.  Utilisation des matériaux en polymères thermoplastiques selon la revendication 1, sous la forme d'articles moulés, d'articles creux, de profilés, de feuilles, de fibres ou de revêtements.